# EUROPEAN PATENT APPLICATION

(11) **EP 2 221 117 A2**
(43) Date of publication of application: **25.08.2010**
(21) Application number: 09175654.4
(22) Date of filing: 11.11.2009
(51) Int. Cl.: B05D 1/28, B60R 13/08

(54) **Transfer-coated acoustic tuning layer**

(30) Priority: 24.11.2008 US 276801
(71) Applicant: International Automotive Components Group North America, Inc., Dearborn, MI 48126 (US)
(72) Inventor: Albin Jr., Donald C., Carlisle, PA 17015 (US)
(74) Representative: Liesegang, Eva

(57) **Abstract**

A method of making a sound insulating layered composite structure by roll coating a padding layer with an emulsion which may then be solidified to form a layer disposed over at least a portion of the padding layer. The emulsion may be applied using various devices and applied at thicknesses as to provide the capability to tune the acoustic performance of the composite.

## Description

### FIELD

The present invention relates to sound absorbing composite structures having an acoustic tuning layer, and more particularly, wherein the tuning layer may be applied by transfer coating.

### BACKGROUND

There is an increasing demand for the reduction of sound levels to improve the quality of sound and the perceived quality of the passenger compartments of automobiles. Development of methods and systems that accomplish such reductions require an understanding of the potential internal and external noise sources in an automobile as well as the effect of various automobile components in masking or attenuating such noise. Moreover, reduction of noise in the 1 kHz to 5 kHz frequency range may be particularly desirable due to the increased sensitivity of vehicle passengers in that range for speech intelligibility and speech clarity.

Some sound insulating components such as dash insulators and vehicle passenger floor components may be tuned acoustically by controlling the air permeability of one or more layers within the composite. Examples of such acoustic tuning layers may include perforated films or fabrics that may be used to control air flow. In other variations, the composite may be coated with a layer of a material such as a sintered or powder coat thermoplastic. These layers may allow one to shift the sound absorption of the composite to lower frequencies.

Accordingly, there is a need for improved methods of forming sound insulating automobile components with adjustable air permeability as well as methods of applying a coating to a given substrate for sound attenuation.

### SUMMARY

In a first aspect, the present disclosure is directed at a method of forming an acoustic tuning layer comprising providing a padding layer having a surface and providing an emulsion coating, wherein the emulsion coating contains a polymer resin suspended in a liquid medium, including an emulsifying agent, wherein the emulsion coating has a first viscosity (η₁). One may then provide a first and a second roll with a nip gap formed therebetween, wherein the second roll has an outer surface and one may operate the first roll to move the padding layer through the nip gap. This may then be followed by heating the second roll and applying the emulsion coating to the outer surface, wherein the coating achieves a second viscosity (η₂), wherein η₂ > η₁. One may then operate the second roll such that the coating engages a surface of the padding layer at the nip gap, wherein the coating is at a third viscosity (η₃) wherein η₃ > η₂ and transferring the coating from the roll surface to the surface of the padding to form an acoustically tuned padding.

In a second aspect, the present disclosure relates to an acoustically tuned sound attenuating composite, comprising a padding layer having a surface, wherein the padding layer is porous and has thickness of 1-50 mm. An emulsion coating is configured on the surface of the padding layer, wherein the emulsion coating comprises a polymer resin suspended in a liquid medium, including an emulsifying agent. The composite is further characterized as having an airflow resistance in the range of about 400 mks Rayls to about 7000 mks Rayls.

### BRIEF DESCRIPTION OF THE DRAWINGS

The accompanying drawings, which are incorporated in and constitute a part of the specification, illustrate embodiments of the invention and, together with the description, serve to explain principles of the invention.
**FIG.** 1 is a schematic view of an apparatus for applying a transfer coating to a composite for tuning acoustic performance, according to the present invention;
**FIG. 2** is a schematic view of another apparatus for applying a transfer coating to a composite for tuning acoustic performance;
**FIG. 3** is a schematic view of another apparatus for applying a transfer coating to a composite for tuning acoustic performance; and
**FIG. 4** is a schematic view of still another apparatus for applying a transfer coating to a composite for tuning acoustic performance.

### DETAILED DESCRIPTION

The present invention now is described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

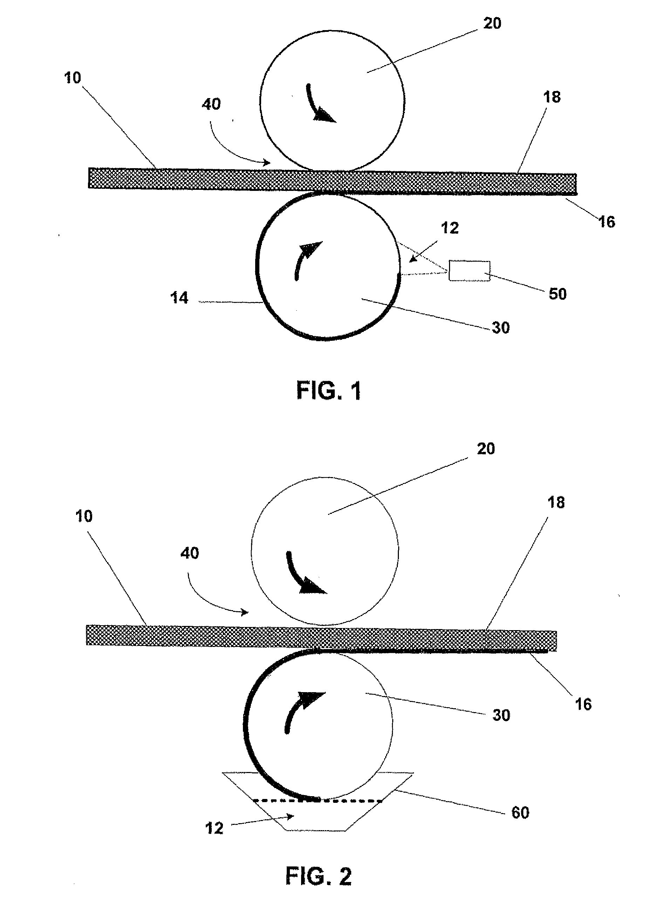

In a first exemplary embodiment, as shown in **FIG. 1**, a sound insulating layered composite structure **18** may be provided by passing a padding layer **10** between rolls **20, 30,** one of the rolls **30** being heated and coated with an emulsion **14** which may be transferred (as **16**) to the padding layer **10** as it passes through the nip **40** between rolls **20, 30.** An emulsion may be understood as a liquid system that contains a polymer along with an emulsifying agent, which agent assists in maintaining the polymer as suspended in the liquid environment. The emulsifying agent may typically amount to a chain structure, wherein one end of the chain provides hydrophobic character, and another end of the chain provides hydrophilic characteristics. In such manner, the emulsifying agent, may, e.g., suspend an organic hydrophobic polymer in an aqueous environment. The level of polymer in the emulsion may reach levels of 5-90 % solids by weight, including all values and increments therein, in 1.0% increments.

The emulsion coating **12** may be sprayed on to the surface of the heated roll **30** and undergo partial solidification **14** due to the heating of the roll as it proceeds towards the nip **40.** Reference to partial solidification may be understood as removal of a portion of the liquid environment noted above with an increase in emulsion viscosity. The emulsion coating at the point of application to the heated roll **30** may have a first viscosity (η₁). For example, one may remove 10% by weight of the liquid environment, which may then provide an increase in the viscosity of the emulsion such that it may retain itself on the roller and release from the roller when in contact with padding layer **10.** The increase in viscosity may be such that a second viscosity (η₂) may be reached (for instance at **14**) wherein η₂ > η_{1.} Finally, when the coating is at the nip **40** and being transferred to the padding layer, the coating layer 16 may have a third viscosity (η₃) wherein η₃ > η₂.

One or more spraying devices **50** may be used to coat all or a portion of the surface of the roll **30** with the emulsion. The spraying apparatus may comprise traversing and/or stationary spray heads that disperse the emulsion coating over at least a portion of the surface of the heated roll to a desired thickness. In addition, the thickness of the emulsion coating formed on the surface of the roll **30** may be varied by varying the application parameters, such as flow rate, % solids of the coating material, residence time of the spraying apparatus over a particular area of the surface of the roll, number of spray heads in use, etc. Varying the thickness of the coating layer provides a means to ultimately tune the acoustic performance of the padding layer by varying the permeability of the composite. That is, if a relatively thicker emulsion coating is applied to the roller, as noted above, such may transfer to the padding layer **10,** and the thicker the coating, the thicker the applied coating layer and the higher the airflow resistance.

As may be appreciated, this now provides the opportunity to provide a continuous method for applying a coating to a given substrate, specifically for airflow resistance, as the coatings, as described more fully below, may be selected from those polymers that will emulsify, and which provide advantageous airflow resistance characteristics.

Once the coated padding layer composite **18,** including the now solidified coating **16,** exits the nip **40,** it may be formed into a non-planar three dimensional contoured configuration for use as, for instance, a dash insulator or floor covering for a vehicle. This may generally be carried out by heating the coated padding **18** by conductive, convective or radiant means in the range of about 270° F to about 400° F and forming the padding to the desired shape in a relatively cold compression mold. Reference to three-dimensional contoured configuration may be understood as a configuration that may provide surfaces that while continuous, are not in the same plane.

Expanding on the above, one may incorporate a heating profile to the roller such that as the roller rotates and liquid is lost, as noted above, the coating increases in viscosity. At the nip location the emulsion based coating may be configured such that it has sufficient mechanical strength so that it may transfer from the heated roller to the padding layer. In addition, the coating may now be one which may still be configured to continue to evaporate liquid, such that at a selected distance from the roller nip, the coating may be one that has a solids content of greater than or equal to 90 %.

The padding layer may comprise any of the materials typically used for sound insulating automotive components. For instance, the padding layer **10** may comprise a fibrous padding or an open-celled foam. Such fibrous padding may include a web of fibers that comprises cotton or polyester (e.g., polyethylene terephthalate) or polyolefin (e.g., polypropylene) fibers, shoddy or combinations thereof. By shoddy, it is meant fibrous material generated from waste fabrics. Such open-celled foam may comprise a relatively flexible polyurethane having a density in the range of about 2.0 to about 6.0 pounds per cubic foot which may also be permeable to air flow. The padding layer may further comprise additives such as glass fibers, fire retardants, and combinations thereof. The padding layer **10** may generally have a basis weight in the range of about 400 to about 1800 grams/square meter and may have a thickness in the range of about 1 mm to about 50 mm, more particularly in the range of about 25 mm to about 40 mm.

As shown in **FIG. 1**, the top roll **20** may be heated or even cooled and provide a means for drawing the padding layer through the nip and for compressing the padding layer into the partially solidified coating **14** in the nip **40.** Additional heating or cooling (not shown) may be provided to the composite **18** after exiting the nip to further solidify the coating **16.**

The rolls **20, 30** may comprise metal, such as stainless steel, and may have a coating of a fluoropolymer, such as polyteti-afluoroethylene (PTFE). The surface of one or both rolls may be textured or may include one or more patterns to further provide an ability to tune the acoustic properties of the solidified coating by varying the thickness of the coating.

In one exemplary embodiment, a carboxylated vinyl-acetate ethylene terpolymer emulsion from Air Products and Chemicals, Airflex 426, was applied to a 16 inch diameter heated roll operating at a take-off speed of 5 feet per minute. Accordingly, the present disclosure may be understood to apply in general to ethylene-vinyl acetate copolymers (EVA's) which may have a melt index of 0.1 to 500 g/10 minutes. The level of ethylene and vinyl acetate may vary from 1-99% by weight to 99%-1% by weight. In addition, as noted, the EVA copolymers may be such that they are carboxylated, which may be understood as introducing a carboxylate type functionality to the EVA chain. One example for the introduction of the carboxylate functionality to an ethylene-vinyl acetate copolymer may be found in U.S. Patent No. 4,157,362.

The roll may then be heated to a temperature of between 200° F to 500°F, including all values and increments therein, in 1.0° F increments. For example, the temperature may be between 350° F and 440° F. The EVA coating may then be applied as an emulsion at about 63% solids at the rate of about 4 ounces per square meter. While a nip gap **4**0 between rolls **20** and **30** of about 0.5 inches may be used, gaps from 3 mm to about 25 mm may also be used depending on the compressive strength and thickness of the padding layer.

The emulsion coatings herein may be applied to the padding in a range of about 0.5 ounces per square meter to about 6.0 ounces per square meter. As noted herein, this then provides a coating, that may be continuously applied, that is useful in tuning the acoustic performance of the composite.

The polymers suitable for emulsion coating herein may include other polymers than EVA copolymers. For example, polymers as alkyds (crosslinkable polyester formulations), acrylics (e.g. polymethylacrylates), epoxy polymers, acrylic/epoxy hybrids, polyurethanes and non-crosslinkable polyesters may make up the polymer suitable for coating of the padding layer **10.** See again, **FIG. 1****.**

**FIG. 2** illustrates another exemplary method of applying the emulsion coating **12** to a heated roll **30** to form a coated padding layer composite **18** using a trough **60** which the roll **30** rotates through and dips into. Contact of the coating **12** with the heated roll **30** may cause the coating to at least temporarily adhere to the surface of the roll where it may partially solidify until the coating is pressed against the padding layer **10** in the nip **40.** At that point, the coating may be transferred on to the padding layer to provide an acoustically tuned composite. The pick-up rate of the coating on the roll may be adjusted by varying such parameters as, for instance, the viscosity and solids level of the coating and the temperature of the roll and of the coating.

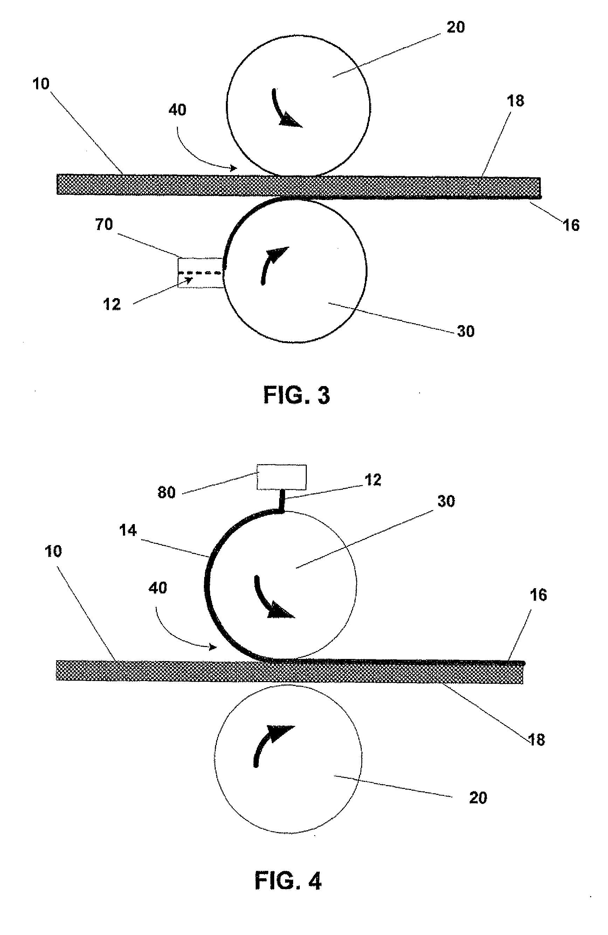

**FIG. 3** illustrates another exemplary method of applying an emulsion coating **12** to a heated roll **30** to form a coated padding layer composite **18** using a mini-trough **70** that may be pressed locally against all of or a portion of the surface of the heated roll **30.** A particular advantage of this apparatus **70** is that a relatively smaller quantity of liquid coating **12** may be exposed to both the atmosphere and to the surface of the heated roll **30,** resulting in improved process control and reduced waste.

**FIG. 4** illustrates another exemplary method of applying the emulsion coating **12** to a heated roll **30** to form a coated padding layer composite **18** using a curtain coater **80** which delivers coating **12.** The coating **12** may be applied to the surface of the heated roll **30** to form the partially solidified coating layer **16.** The deposition rate of the coating on the roll may be adjusted by varying the % solids and viscosity of the coating and the flow rate from the coater.

A coated padding layer composite **18** may thus be provided wherein the solidified coating **16** may act as an acoustic tuning layer as the coating may provide a predetermined air flow resistance due to the thickness of the coating. The method of the present invention advantageously allows for a tailoring or tuning of the air flow resistance of the sound insulating composite structure. The air flow resistance may be determined according to ASTM test method C522-03. The air flow resistance provided by the methods described herein may be in the range of about 400 mks Rayls to about 7000 mks Rayls (where 1 mks Rayl equals 1 pascal-second per meter (Pa·s/m), or (equivalently) 1 newton-second per cubic meter (N·s/m³). The composite **18** may also be characterized by the position of its peak sound absorption. The sound insulating layered composite **18** may have a peak sound absorption at a sound frequency in a range from about 400 Hz to about 6,400 Hz.

The coating material may further comprise a mixture of cross-linkable polymer precursors which may not require the addition of heat to solidify, including polyurethane compositions. Such compositions may include a two component system that may be mixed prior to or during the step in which coating **12** is contacted with padding layer **10.**

While the coating compositions used in the present invention have been described as being solidified by the application of heat, it is contemplated that the liquid coating may also be solidified by the application of infrared or ultraviolet energy.

The description and drawings illustratively set forth the presently preferred invention embodiments. The description and drawings are intended to describe these embodiments and not to limit the scope of the invention. Those skilled in the art will appreciate that still other modifications and variations of the present invention are possible in light of the above teaching while remaining within the scope of the following claims. Therefore, within the scope of the claims, one may practice the invention otherwise than as the description and drawings specifically show and describe.

## Claims

1. A method of forming an acoustic tuning layer comprising:
providing a padding layer having a surface;
providing an emulsion coating, wherein said emulsion coating contains a polymer resin suspended in a liquid medium, including an emulsifying agent, wherein said emulsion coating has a first viscosity (η₁);
providing a first and a second roll with a nip gap formed therebetween, wherein said second roll has an outer surface;
operating said first roll to move said padding layer through said nip gap;
heating said second roll and applying said emulsion coating to said outer surface, wherein said coating achieves a second viscosity (η₂), wherein η₂ > η₁;
operating said second roll such that said coating engages a surface of said padding layer at said nip gap, wherein said coating is at a third viscosity (η₃) wherein η₃ > η₂; and
transferring said coating from said roll surface to said surface of said padding to form an acoustically tuned padding.

2. The method of claim 1 wherein said padding layer comprises a foam, shoddy or a web of fibers having a basis weight in the range of between about 400 to about 1800 grams per square meter.

3. The method of claim 1 or 2 wherein said coating is applied in the range of about 0.5 to about 6 ounces per square meter.

4. The method of one of the preceding claims wherein said emulsion coating is applied to said outer surface of said heated roll by spraying.

5. The method of one of claims 1 to 3 wherein said emulsion coating is applied to said outer surface of said heated roll by dipping.

6. The method of one of claims 1 to 3 wherein said emulsion coating is applied to said outer surface of said heated roll by curtain coating.

7. The method of one of the preceding claims wherein said second roll may be heated to a temperature in the range of 200°F to 500°F.

8. The method of one of the preceding claims wherein said second roll is coated with a fluropolymer material.

9. The method of one of the preceding claims wherein said acoustically tuned padding has an air flow resistance in the range of about 400 mks Rayls to about 7000 mks Rayls.

10. The method of one of the preceding claims wherein said acoustically tuned padding is formed into a non-planar three dimensional contoured configuration.

11. The method of one of the preceding claims wherein said polymer contained in said emulsion coating comprises an ethylene-vinyl acetate copolymer.

12. The method of one of claims 1 to 10 wherein said polymer contained in said emulsion coating comprises polymers selected from the group consisting of crosslinkable polyesters, acrylics, epoxy polymers, acrylic-epoxy hybrid polymers, polyurethanes, and non-crosslinkable polyesters.

13. A method of forming an acoustic tuning layer comprising:
providing a padding layer having a surface;
providing an emulsion coating, wherein said emulsion coating contains ethylene-vinyl acetate copolymer resin suspended in a liquid medium, including an emulsifying agent, wherein said emulsion coating has a first viscosity (η₁);
providing a first and a second roll with a nip gap formed therebetween, wherein said second roll has an outer surface;
operating said first roll to move said padding layer through said nip gap;
heating said second roll and applying said emulsion coating to said outer surface, wherein said coating achieves a second viscosity (η₂), wherein η₂ > η₁, and wherein said second roll may be heated to a temperature in the range of 200°F to 500°F;
operating said second roll such that said coating engages a surface of said padding layer at said nip gap, wherein said coating is at a third viscosity (η₃) wherein η₃ > η₂; and
transferring said coating from said roll surface to said surface of said padding to form an acoustically tuned padding wherein said acoustically tuned padding has an air flow resistance in the range of about 400 mks Rayls to about 7000 mks Rayls.

14. An acoustically tuned sound attenuating composite, comprising:
a padding layer having a surface, wherein said padding layer is porous and has thickness of 1-50 mm;
an emulsion coating applied to said surface of said padding layer, wherein said emulsion coating comprises a polymer resin suspended in a liquid medium, including an emulsifying agent;
wherein said composite has an airflow resistance in the range of about 400 mks Rayls to about 7000 mks Rayls.

15. The composite of claim 14 wherein said polymer contained in said emulsion coating comprises an ethylene-vinyl acetate copolymer.
